# EUROPEAN PATENT APPLICATION

(11) **EP 1 867 460 A2**
(43) Date of publication of application: **19.12.2007**
(21) Application number: 07075473.4
(22) Date of filing: 14.06.2007
(51) Int. Cl.: B29C 47/12, B29C 47/90

(54) **Corrugated plastic pipe production**

(30) Priority: 16.06.2006 EP 06076247
(71) Applicant: WAVIN B.V., 8011 CW Zwolle (NL)
(72) Inventor: Banczyk, Leszek, c/o Wavin Metalplast-Buk Sp. z o.o., 64-320 Buk (PL)
(74) Representative: Brookhuis, Hendrik Jan Arnold

(57) **Abstract**

A method for production of a corrugated plastic pipe having an inner plastic wall (1a) and a corrugated outer plastic wall (1b) fused to the exterior of said inner plastic wall (1a), wherein one or more cavities are delimited between said inner (1a) and outer walls (1b).

The method comprises the extrusion of said inner plastic wall (1a) using an extruder having a die head with an inner die head (5a) part defining the interior of the inner plastic wall (1a), and also extruding and shaping said corrugated outer plastic wall (1b).

The corrugated outer wall (1b) and said inner wall (1a) are fused in the process. A mandrel (15) is positioned within said inner wall (1a), said mandrel (15) being attached to said extruder, said mandrel (15) internally supporting said inner wall (1a).

## Description

The present invention relates to the field of corrugated plastic pipe production.

Corrugated plastic pipes having an inner plastic wall and a corrugated outer plastic wall fused to the exterior of said inner plastic wall are well known. These pipes are often referred to as "twin wall corrugated pipes". The corrugated outer wall can have a helically oriented corrugation. It is also known to provide "transverse corrugations" wherein a plurality of annular corrugation profiles are present, which are arranged axially spaced from one another along the length of the pipe.

Corrugated plastic pipes are for example used as sewer pipes, wherein large diameters are employed, e.g. large than 30 centimetres. Smaller diameter pipes, also for other purposes, are also known.

Corrugated plastic pipes are commonly made using a production installation including one or more extruders, one or more die heads, and a "corrugator" which serves to shape or mould the corrugated outer wall.

In a common design a corrugator includes two synchronously circulating chains of mould halves, a guide device for the mould halves having an input zone in which the associated mould halves are brought into engagement with each other, a moulding zone in which a central channel is provided for guiding the engaged mould halves and an output zone in which the mould halves are again separated from each other, as well as return guides for the mould halves on the path between the output and input zones. Also known is a shuttle system, wherein the mould halves are sent back individually with increased return speed. Corrugators are manufactured by companies like Corma Inc, Hegler Plastic GmbH and Unicor Plastic Machinery.

It is known to provide the corrugator with cooling means, commonly cooling the mould halves of the corrugator and possibly also the exterior of the pipe.

The inner and outer wall are fused in the production process, commonly by urging them with significant pressure against one another while still hot so that the walls fuse or weld together.

It is also common for such a production installation to include a mandrel positioned within the inner wall, generally in the zone where the fusion takes places, in order to support the inner wall.

It is also known to pass a cooling liquid through said mandrel to assist in cooling of said plastic pipe.

A problem associated with the production of twin walled corrugated plastic pipes is that in the finally produced pipes the inner wall obtains a sort of wave pattern, somewhat similar to a low amplitude corrugation profile but then on the interior of the pipes. Although some "waviness" of the inner wall is in general considered allowable, e.g. for large diameter pipes, it has been found that the formation of waves in the inner wall hinders efficient production and is detrimental to product quality and/or appreciation of the pipe by the end users.

It is an object of the present invention to propose improvements in the production of corrugated plastic pipes which allow to counteract, possibly to alleviate or minimise wave formation in the inner wall and/or increase production efficiency.

According to a first aspect thereof the present invention provides a method according to claim 1.

According to a second aspect thereof the present invention provides a method according to claim 2.

The invention is based on the insight that as a result of the cooling of the pipe the air within the cavity or cavities is cooled and a vacuum is established within said one or more cavities between the inner wall and the outer wall. This vacuum basically has the effect of "sucking outwards" the still warm and thus rather soft inner wall at the location of the corrugation(s), which results in the "wavy appearance" of the inner wall.

In this first aspect of the invention it is envisaged that the vacuum within the vacuum compartment counteracts the above-described vacuum within the one or more cavities of the corrugated pipe and thus allows to reduce the wave formation in the inner wall of the pipe.

Preferably the vacuum within the vacuum compartment is adjustable during production to optimise the envisaged "counteracting effect".

It can be envisaged that a diameter measurement or other measurement of the cross-sectional dimensions of the pipe is carried out, e.g. downstream of the vacuum compartment, and that the vacuum is controlled on the basis of measurement results obtained thereby. This allows to create a (automated) feedback control loop for the vacuum within the vacuum compartment.

When using a vacuum compartment in corrugated pipe production an advantageous design of the downstream sealing plug is disclosed in claim 6. The liquid, preferably water, filled chamber prevents air from leaking into the vacuum compartment. By the presence of the water filled chamber the seals can be designed relatively flexible which is advantageous in view of the friction between the seals and the pipe. Stiffer seals are likely to leak less and might allow to do away with the liquid filled chamber. However stiffer seals are expected to cause problems related to frictional forces, scratching, etc.

According to the second aspect of the present invention an effective cooling of the inner wall can be achieved, so that this inner wall "rapidly" achieves a rigidity which allows it to withstand the forces exerted by the vacuum within the cavities or hollow space(s) of the corrugations. As such the formation of the wavy appearance in the inner wall is counteracted for this type of pipe.

In a practical and preferred embodiment water will be used as cooling liquid.

By the provision of the cooling compartment, preferably immediately downstream of the mandrel, the effect is achieved that over a trajectory efficient internal cooling of the pipe can be effected. This type of cooling is so efficient that in practice the length of the trajectory can be quite limited, e.g. between 70 and 140 centimetres for a pipe inner diameter up to 60 centimetres.

Compared to the known use of a cooled mandrel only for internal cooling in corrugated pipe production, the second aspect of the present invention has the additional advantage that the frictional forces can be kept low. Lengthening the mandrel for internal cooling purposes would have the effect of significantly increasing the friction with the pipe. Friction between the mandrel and the pipe is increased all the more by shrinkage of the pipe as it is cooled. A conical design of the mandrel, tapering in downstream direction, might alleviate this problem somewhat but as plastic materials show different shrinkage behaviour (also under different production conditions) it is impractical to design such a conical mandrel.

Preferably, in combination with the cooling liquid compartment, the mandrel is cooled, so that some internal cooling is already effected by the passage of the pipe along the mandrel.

An issue relating to the use of a cooling liquid (e.g. water) compartment as in the second aspect of the invention resides in the formation of gas or (water) vapour bubbles within the cooling liquid. These will rise to the highest point within the compartment and are likely to locally reduce the cooling efficiency. This causes a non-uniform cooling in circumferential direction of the pipe with undesirable effects as visible marks and local stresses in the pipe.

The present invention proposes to overcome this issue, when it does arise in an undesirable manner, by providing a turbulent flow of the liquid within the cooling liquid compartment. This prevents the gas or vapour bubbles from rising upwards and keeps them distributed throughout the liquid. In this manner they are removed from the compartment with the liquid flow leaving the compartment.

Advantageous embodiments providing turbulent cooling liquid flow are described in the claims and the description which follows.

It is envisaged that the last-mentioned solution of providing turbulent flow within a cooling liquid compartment within a plastic pipe emerging from an extrusion process can also be applied with other plastic pipes than corrugate pipes, e.g. single wall (possibly multilayer) plastic pipe production, most advantageously when thick walled pipes (e.g. PP or PE) are produced.

It is envisaged that a corrugated pipe can also be produced according to a method including both the above mentioned aspects of the present invention. This combination can e.g. be performed for large diameter and/or thick walled pipes.

Without the efficient cooling by means of the water cooling compartment it is likely that production speed will have to be limited in order to avoid the problem of wave formation in a satisfactory manner.

For smaller diameter and/or thin walled corrugated pipes, it can be envisaged to use a cooled mandrel followed by a vacuum compartment in the absence of an internal cooling liquid compartment. It is then expected that the cooled mandrel provides for sufficient internal cooling of the pipe. As mentioned above this approach may also be suitable for larger diameter pipes, with likely some restrictions on production speed.

The present invention further relates to a production installation adapted for carrying out the methods according to the invention, a corrugated plastic pipe obtained by the methods of the invention, a sealing plug to be used with the method according to the present invention.

The invention will be explained in more detail below with reference to the drawing, in which:
FIG. 1 shows a diagrammatic plan view, partially in section, of an exemplary embodiment of a production installation and the production of corrugated plastic pipe according to the invention,
FIG. 2 shows on a larger scale the internal cooling of the embodiment in figure 1, and
FIG. 3 shows on a larger scale the plug sealing the downstream end of the vacuum compartment.

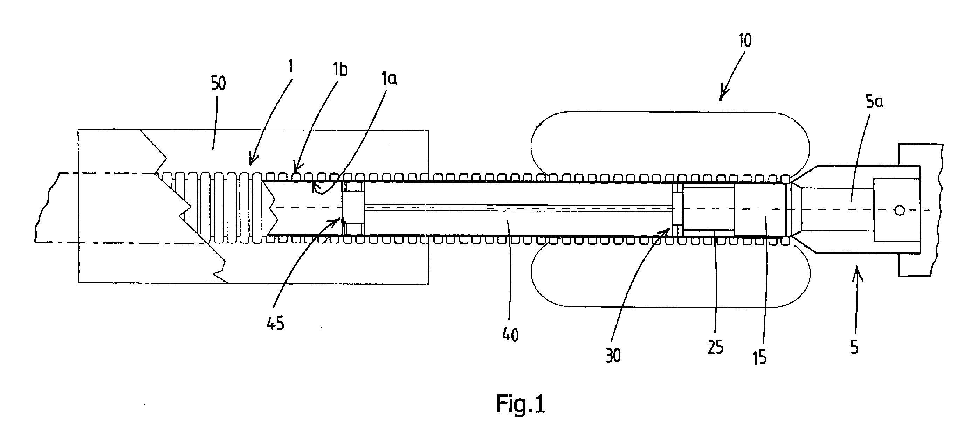

Referring to the figure 1 an example of the production of a corrugated pipe 1 according to the present invention will be discussed. The pipe 1 is shown partly in cross-section.

The pipe 1 shown here has an inner wall 1a and an outer wall 1b with transverse corrugations each forming an annular cavity between the outer wall and the inner wall. The pipe in this example is also not provided with any sort of perforation during the production process, at least not before final cooling to ambient temperature has been effected in the process. The result is that each cavity is without communication to the environment. It will be shown below that the proposals according to the present invention are in particular advantageous for this type of pipe. Nonetheless the advantages also apply, at least to some degree, to pipes having a helical corrugation in the outer wall and/or a perforated outer and/or inner wall.

The pipe 1 shown in the example also has relatively wide corrugations, which renders the inner wall susceptible to deformation as a result of the vacuum that is caused within a cavity as the pipe is cooled.

An example of this type of pipe 1 (non-perforated walls and relatively wide transverse corrugations) is shown in detail in WO 2006/004393.

The production installation for production of the pipe includes in this example the following equipment (mostly shown in very diagrammatic form only as they are well known in the art):
- two extruders (not shown) for extruding thermoplastic material forming the inner wall and the outer wall of the pipe 1 respectively,
- a die head 5 having an inner die head part 5a defining the interior of the inner plastic wall. In this example the die head 5 is of the type from which the inner wall and the outer wall emerge in coaxial arrangement. Other extruder/die head arrangements are known for extruding corrugated plastic pipes.
- a corrugator 10 stationed here downstream of the extruders with die head 5a and in close vicinity therewith. The corrugator 10 here is of a known design including two synchronised endless tracks having mould halves which engage on the outer wall as it emerges from the head 5a. The mould halves provide the outer wall with its corrugated shape, e.g. by providing a vacuum between the outer wall and the mould halves.
- a mandrel 15, here a cooling mandrel 15, which is positioned within said inner wall as it emerges from the die head 5a. The mandrel 15 is attached to the die head 5a and thus to the extruder. The mandrel 15 is located preferably at or near the upstream end of the trajectory wherein the corrugator 10 engages on the outer wall. In this example the mandrel 15 not only internally supports said inner wall but also causes said inner wall to be forced outwardly against the corrugated outer wall. The mandrel 15 is provided, as is known in the art, with cooling means (e.g. one or more channels within the mandrel through which cooling liquid is circulated) to effect a first internal cooling of the pipe (mostly of the inner wall).

As is shown here, and is preferred, said mandrel 15 only extends over a part of the length of the trajectory wherein the corrugator 10 engages on the outer wall. In other words the length of the mandrel 15 is only a part, e.g. less than 50%, more preferably less than 35%, most preferably less than 25%, of the length of the corrugator.

As mentioned in the introduction the corrugations form closed annular cavities. The applicant has found that once a cavity has been formed it is without communication to the environment. Upon cooling of the pipe, the air in the cavity cools down and a vacuum is created. This vacuum within the cavity, although its pressure value as such can seem insignificant, has the effect of sucking outwards the adjacent part of the inner wall of the pipe.

The embodiment shown in figure 1 provides for the presence of a cooling liquid compartment 25 downstream from the mandrel 15. As the cooling liquid used most preferably is water (e.g. of about 15° C) the term water will be used in the remainder of the description. Nonetheless other cooling liquids, e.g. water admixed with additives, etc. can be envisaged.

The cooling compartment 25 is established within the inner wall, here directly downstream of the mandrel 15 as is preferred (at least for large diameter and/or thick wall pipes).

To establish the cooling compartment a sealing plug 30 is attached to the mandrel 15, so that the compartment is delimited here between the sealing plug 30 and the mandrel 15. The sealing plug 30 here includes a set of elastic flaps 26, e.g. silicon rubber flaps, here three neighbouring flaps engaging in a sealing manner on the inside of the inner wall.

The sealing plug 30 could be attached to the mandrel 15 by any suitable means, e.g. by a slender rod. Preferably between the sealing plug 30 and the mandrel a cylindrical body 31 is provided having a diameter smaller than the inner wall so that an annular gap 32, preferably of at least 5% of the inner wall diameter and at most 20% of the inner wall diameter 1, is present between the body 31 and the inner wall.

This annular gap is cooling water filled and said water is circulated continuously, preferably such that the water in the gap is in turbulence.

To obtain cooling water circulation a cooling water feed line 32 is associated with said compartment 25, and a cooling water return line 33 is associated with said compartment 25. The feed line 32 extends through the die head and the mandrel 15 and into the body 31. There the feed line 31 ends in one or more exhausts at the surface of the body.

It is preferred to introduce the cooling water such into the gap that a turbulent flow is achieved with the gap. This can for instance be achieved by forming the exhaust as one or more nozzles which are oriented in a direction which includes a tangential portion with respect to the inner wall. As such a turbulent swirling motion of the water is created. This has the effect disclosed above of preventing accumulation of air or vapour at the highest point of the compartment 25.

As an alternative to the suitable arrangement of one or more nozzles, or in combination therewith, it is envisaged that a dynamic agitator, e.g. a rotary device, is positioned within said cooling compartment or that a static agitator is positioned with said cooling compartment to obtain the desired turbulence.

Should providing a turbulent water flow within the compartment be deemed undesirable and/or insufficient to counter the collection of air/vapour at said highest point, it can be envisaged to provide a degassing line 34 having a mouth at said highest point within the compartment 25. Via said line 34 air/vapour can be removed from the compartment 25.

The direct water cooling of the pipe, mainly of the inner wall thereof, downstream of the mandrel 15 has the effect that the inner wall solidifies rapidly and attains a rigidity which can counter the effect of the vacuum within the corrugation cavities.

It can be recognised in figure 1 that the length of the water cooling compartment 25 is rather short, e.g. of the same length as the mandrel 15. In particular, as is found advantageous, the sealing plug 30 is located within the trajectory wherein the corrugator 10 engages on the outer wall.

The figure 1 furthermore shows that downstream from said compartment 25 a vacuum compartment 40 is established within said inner wall using a sealing plug 45. This sealing plug 45 is spaced from the sealing plug 30 and attached thereto, here by a rather slender tubular member 50.

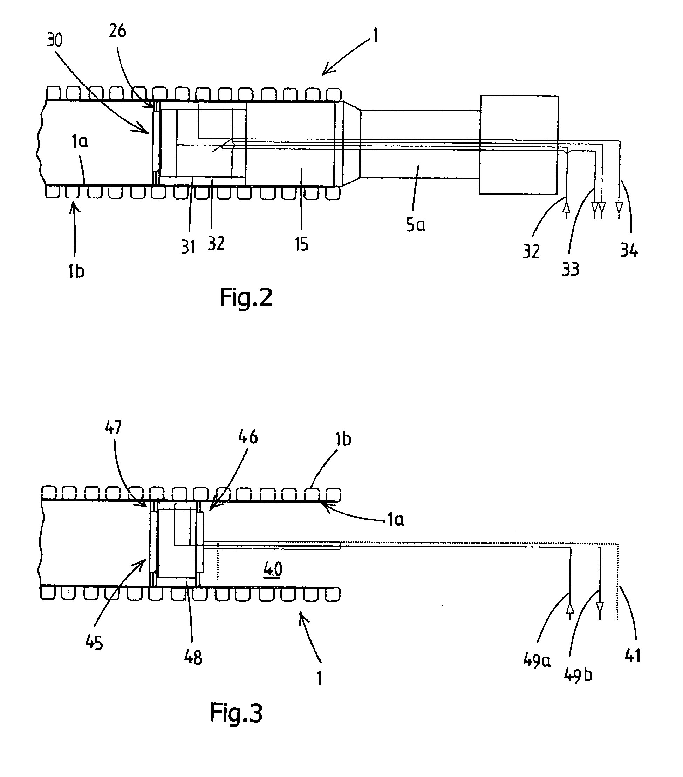

The sealing plug 45 seals against the inside of the inner wall. A preferred embodiment is shown in figure 3 and will be discussed in detail later.

A vacuum is established within said vacuum compartment 40 which serves to at least partly counteract the vacuum within the cavities of the plastic pipe resulting from the cooling of the plastic pipe. Basically during the production of the pipe 1 one could strive to create "equal vacuums" on both the inside and the outside (within the cavity) of the inner wall.

In order to cause the vacuum within the compartment 40 it is preferred that a vacuum line 41 extends from said compartment 40, through the compartment 25, mandrel 15 and die head 5a to a suitable vacuum pump or the like.

It is envisaged that such an arrangement allows to create an adjustable vacuum within the compartment 40. One could even envisage the use of multiple vacuum compartments in series, wherein differing vacuum pressures are created to achieve a particular effect, e.g. a lesser vacuum where the inner wall is still hot and a higher vacuum in a vacuum compartment downstream thereof.

One could also envisage to control the vacuum created in a vacuum compartment 40 during the production process, as compared to setting the vacuum at a predetermined level. Dynamic control of the vacuum during production might be achieved using a diameter measurement or other measurement of the cross-sectional dimensions of the pipe 1, e.g. using X-ray. This measurement preferably is carried out "inline" downstream of the vacuum compartment(s). The vacuum is then e.g. controlled on the basis of measurement results obtained thereby. This allows to create a (automated) feedback control loop for the vacuum within a vacuum compartment.

In figure 3 a preferred embodiment of the sealing plug 45 is shown. As mentioned this sealing plug delimits the vacuum compartment at an end, here the downstream end, thereof. The plug 45 comprises a body and forward and rearward elastic seals 46, 47 fitted on said body so as to be spaced from one another in the production direction of the pipe. Each of the seals 46, 47 is adapted to sealingly engage on the inner wall. It is also shown that a liquid (preferably water) filled chamber 48 is established between said forward and rearward elastic seals 46, 47. The water in the chamber 48 prevents air from leaking into the vacuum compartment 40. An advantage of this arrangement is that friction on the pipe is limited even tough the vacuum in compartment 40 obviously tends to pull the inner wall inwards onto the plug 45.

It might happen that water from chamber 48 leaks into compartment 40 which does not affect the vacuum in a significant manner. The loss of water from chamber 48 is preferably compensated for via a water feed line 49a. In this embodiment it is also envisage that a circulation of water in chamber 48 is established using water return line 49b.

The seals 46, 47 here are embodied as flexible elements, e.g. silicone rubber flaps. For example the forward seal 46 has two neighbouring silicone flaps and the rearward seal 47 three such flaps.

It is noted here that, just as providing multiple distinct vacuum compartments, the invention envisages the use of multiple cooling water compartments in series within the inner wall. This e.g. to circulate water therein of different temperatures.

As mentioned before it can be envisaged that - e.g. for small diameter pipes - the water cooling compartment 25 is absent and a vacuum compartment is arranged directly downstream of the mandrel 15.

Figure 1 also shows an external cooling device 50 arranged downstream of the corrugator 10 to provide external cooling of the pipe 1. For instance the device includes a cooling bath through which the pipe is passed as is well known in the art. As shown it is envisaged that a vacuum compartment is present within the pipe at the location of said external cooling device 50.

## Claims

1. Method for production of a corrugated plastic pipe (1) having an plastic inner wall (1a) and a corrugated plastic outer wall (1b) fused to the exterior of said inner wall, wherein one or more cavities are delimited between said inner and outer walls, said method comprising:
extruding said plastic inner wall (1a) using an extruder having a die head (5) with an inner die head part (5a) defining the interior of the inner wall,
extruding and shaping said corrugated plastic outer wall (1b), fusing said corrugated outer wall and said inner wall,
wherein a mandrel (15) is positioned within said inner wall, said mandrel being attached to said extruder and said mandrel internally supporting said inner wall,
the method further including the cooling of said plastic pipe,
**characterised in that**
downstream from said mandrel (15) a vacuum compartment (40) is established within said inner wall (1a) using one or more sealing plugs (45) attached to said mandrel and sealingly engaging the inner wall,
and **in that** a vacuum is established within said vacuum compartment (40) which serves to counteract a vacuum within the one or more cavities of the plastic pipe resulting from the cooling of said plastic pipe.

2. Method for production of a corrugated plastic pipe (1) having a plastic inner wall (1a) and a corrugated plastic outer wall (1b) fused to the exterior of said inner wall, wherein one or more cavities are delimited between said inner and outer walls, said method comprising:
extruding said plastic inner wall (1a) using an extruder having a die head (5) with an inner die head part (5a) defining the interior of the inner wall,
extruding and shaping said corrugated plastic outer wall (1b), fusing said corrugated outer wall and said inner wall,
wherein a mandrel (15) is positioned within said inner wall, said mandrel being attached to said extruder and said mandrel internally supporting said inner wall,
the method further including the cooling of said plastic pipe,
**characterised in that**
downstream from said mandrel (15) a cooling liquid compartment (25) is established within said inner wall (1a) using one or more sealing plugs (30) attached to said mandrel and sealingly engaging the inner wall,
and **in that** a cooling liquid is circulated through said cooling liquid compartment (25) which cools the plastic pipe.

3. Method according to claim 1 and 2, wherein downstream from said mandrel both at least one cooling liquid compartment (25) and at least one vacuum compartment (40) are established.

4. Method according to claim 3, wherein downstream from said mandrel a cooling liquid compartment (25) is established and downstream thereof a vacuum compartment (40).

5. Method according to claim 3 or 4, wherein downstream and spaced from said mandrel a first sealing plug (30) is positioned, said first sealing plug being attached to said mandrel and sealingly engaging the inner wall, thereby forming a cooling liquid compartment (25) within said inner wall between said mandrel and first sealing plug, and wherein downstream and spaced from said first sealing plug (30) a second sealing plug (45) is positioned, attached to said first sealing plug and sealingly engaging the inner wall, thereby forming a vacuum compartment (40) within said inner wall between first sealing plug and said second sealing plug.

6. Method according to claim 1, wherein a sealing plug (45) delimits the vacuum compartment (40) at an end thereof, e.g. the downstream end, said sealing plug (45) being attached to said mandrel and sealingly engaging the inner wall, wherein said sealing plug comprises forward and rearward elastic seals (46,47), spaced from one another and adapted to sealingly engage on the inner wall, a liquid filled chamber (48) being established between said forward and rearward elastic seals (46,47).

7. Method according to claim 6, wherein a liquid feed line is associated with said liquid filled chamber, and wherein liquid is fed to said liquid filled chamber so as to compensate for any leakage of liquid from said chamber.

8. Method according to claim 7, wherein also a liquid return line is associated with said liquid filled chamber, and wherein a circulation of liquid through said liquid filled chamber is established using said liquid feed and liquid return lines.

9. Method according to claim 2, wherein in said liquid cooling compartment a turbulent cooling liquid flow is established.

10. Method according to claim 9, wherein a dynamic agitator is positioned within said cooling compartment or wherein a static agitator is positioned with said cooling compartment.

11. Method according to claim 2, wherein a cooling liquid feed line is associated with said liquid cooling compartment, and wherein a cooling liquid return line is associated with said liquid cooling compartment, and wherein a circulation of liquid through said liquid cooling compartment is established using said cooling liquid feed and return lines.

12. Method according to claim 2, wherein cooling liquid is introduced into said cooling compartment using one or more cooling liquid nozzles, preferably oriented in a direction which includes a tangential portion with respect to the inner wall, preferably a nozzle oriented substantially in tangential direction.

13. Method according to one or more of the preceding claims, wherein said one or more cavities between the inner and outer wall remain closed without communication to the environment during the production process, at least until the pipe has been cooled to ambient temperature.

14. Corrugated plastic pipe produced with the method according to one or more of the preceding claims.

15. Installation for the production of a corrugated plastic pipe according to claim 2, said pipe (1) having a plastic inner wall (1a) and a corrugated plastic outer wall (1b) fused to the exterior of said inner wall, wherein one or more cavities are delimited between said inner and outer walls, said installation comprising:
an extruder (5) extruding said plastic inner wall, said extruder having a die head (5) with an inner die head part (5a) defining the interior of the inner wall,
means (5,10) for extruding and shaping said corrugated plastic outer wall, as well as for fusing said corrugated outer wall and said inner wall,
a mandrel (15) positioned within said inner wall during production, said mandrel being attached to said extruder and said mandrel internally supporting said inner wall,
means (50) for cooling said plastic pipe,
**characterised in that**
downstream from said mandrel (15) the installation comprises a cooling liquid compartment (25), which is established within said inner wall by one or more sealing plugs (30) attached to said mandrel (15) and sealingly engaging the inner wall,
and **in that** means for circulating a cooling liquid through said cooling liquid compartment (25) are provided to cool the plastic pipe.

16. Installation for the production of a corrugated plastic pipe according to claim 1, said pipe (1) having a plastic inner wall (1a) and a corrugated plastic outer wall (1b) fused to the exterior of said inner wall, wherein one or more cavities are delimited between said inner and outer walls, said installation comprising:
at least one extruder extruding said plastic inner wall, said extruder having a die head (5) with an inner die head part (5a) defining the interior of the inner wall,
means (5,10) for extruding and shaping said corrugated plastic outer wall, as well as for fusing said corrugated outer wall and said inner wall,
a mandrel (15) positioned within said inner wall during production, said mandrel being attached to said extruder and said mandrel internally supporting said inner wall,
means (50) for cooling said plastic pipe,
**characterised in that**
the installation comprises - downstream from said mandrel (15) - a vacuum compartment (40), which is established within said inner wall during production by means of one or more sealing plugs (45) attached to said mandrel (15) and sealingly engaging the inner wall, and **in that** vacuum means are provided to establish a vacuum within said vacuum compartment which serves to counteract a vacuum within the one or more cavities of the plastic pipe resulting from the cooling of said plastic pipe.
